# EUROPEAN PATENT APPLICATION

(11) **EP 4 773 587 A1**
(43) Date of publication of application: **08.07.2026**
(21) Application number: 24858718.0
(22) Date of filing: 30.08.2024
(51) Int. Cl.: H04N 5/76

(54) **VIDEO PROCESSING METHOD AND APPARATUS, AND ELECTRONIC DEVICE**

(30) Priority: 31.08.2023 CN 202311118724
(71) Applicant: Beijing Zitiao Network Technology Co., Ltd., Beijing 100190 (CN)
(72) Inventor: HUANG, Lei, Beijing 100028 (CN)
(74) Representative: Marks & Clerk LLP
(86) International application number: PCT/CN2024/115774
(87) International publication number: WO 2025/045187

(57) **Abstract**

The present disclosure provides a video processing method and apparatus, and an electronic device. The method comprises: in response to a touch operation for a photographing control in a photographing interface, recording a first video segment; acquiring at least one second video segment in a preset storage space, the second video segment being a video segment recorded before the touch operation, and the preset storage space being used to store one or more newest recorded video segments before the touch operation; on the basis of the first video segment and the at least one second video segment, generating a video.

## Description

The present application claims priority to Chinese Patent Application No. 202311118724.1, filed on August 31, 2023, which is incorporated herein by reference in its entirety as a part of the present application.

### TECHNICAL FIELD

Embodiments of the present disclosure relate to a video processing method and apparatus, and an electronic device.

### BACKGROUND

A live photo is a dynamic image, and when a user long-presses the image, an electronic device can play a scene captured before the image was taken and a scene captured after the image was taken.

Currently, when a user opens a shooting interface of the electronic device, the electronic device may start recording a video and store the recorded video in a cache. When the user presses a shooting control, the electronic device may stop video recording after a duration, and extract a segment of video from the cached video, thereby obtaining a dynamic image. However, in the above-mentioned method, the video cached in the electronic device occupies significant memory, which is prone to memory overflow, leading to memory resource waste.

### SUMMARY

The present disclosure provides a video processing method and apparatus, and an electronic device.

According to a first aspect, the present disclosure provides a video processing method. The method includes:
recording a first video segment in response to a touch operation on a shooting control on a shooting interface;
obtaining at least one second video segment from a preset storage space, where the second video segment is a video segment recorded prior to the touch operation, and prior to the touch operation, the preset storage space is used to store one or more latest recorded video segments; and
generating a video based on the first video segment and the at least one second video segment.

According to a second aspect, the present disclosure provides a video processing apparatus. The video processing apparatus includes a recording module, an obtaining module, and a generation module.

The recording module is configured to record a first video segment in response to a touch operation on a shooting control on a shooting interface.

The obtaining module is configured to obtain at least one second video segment from a preset storage space, where the second video segment is a video segment recorded prior to the touch operation, and prior to the touch operation, the preset storage space is used to store one or more latest recorded video segments.

The generation module is configured to generate a video based on the first video segment and the at least one second video segment.

According to a third aspect, the present disclosure provides an electronic device. The electronic device includes a processor and a memory.

The memory stores computer-executable instructions.

The computer-executable instructions stored in the memory, when executed by the processor, cause the at least one processor to perform the video processing method according to the first aspect and various possible designs of the first aspect.

According to a fourth aspect, the present disclosure provides a computer-readable storage medium storing computer-executable instructions, where when the computer-executable instructions are executed by a processor, the video processing method according to the first aspect and various possible designs of the first aspect is implemented.

### BRIEF DESCRIPTION OF DRAWINGS

In order to describe the technical solutions in the embodiments of the present disclosure more clearly, the drawings for describing the embodiments will be briefly described below. Apparently, the drawings in the following description are some embodiments of the present disclosure, and those of ordinary skill in the art may still derive other drawings from these drawings without creative efforts.
Fig. 1 is a schematic diagram of an application scenario according to the embodiments of the present disclosure;
Fig. 2 is a schematic flowchart of a video processing method according to the embodiments of the present disclosure;
Fig. 3 is a schematic diagram of a process of obtaining a first video segment according to the embodiments of the present disclosure;
Fig. 4 is a schematic diagram of obtaining a third video segment according to the embodiments of the present disclosure;
Fig. 5 is a schematic diagram of a process of determining a second video segment according to the embodiments of the present disclosure;
Fig. 6 is a schematic diagram of generating a video according to the embodiments of the present disclosure;
Fig. 7 is another schematic diagram of generating a video according to the embodiments of the present disclosure;
Fig. 8 is a schematic diagram of a method for storing a plurality of video segments according to the embodiments of the present disclosure;
Fig. 9 is a schematic diagram in which an electronic device stores a plurality of video segments according to the embodiments of the present disclosure;
Fig. 10 is a schematic structural diagram of a video processing apparatus according to the embodiments of the present disclosure;
Fig. 11 is a schematic structural diagram of another video processing apparatus according to the embodiments of the present disclosure; and
Fig. 12 is a schematic structural diagram of an electronic device according to the embodiments of the present disclosure.

### DETAILED DESCRIPTION

Exemplary embodiments are described in detail herein, and examples thereof are illustrated in the drawings. When the following description relates to the drawings, the same numerals in different drawings denote the same or similar elements, unless otherwise indicated. The implementations described in the following exemplary embodiments do not represent all the implementations consistent with the present disclosure. Rather, they are merely examples of apparatuses and methods that are consistent with some aspects of the present disclosure and that are described in detail in the appended claims.

For ease of understanding, concepts involved in the embodiments of the present disclosure are described below.

An electronic device is a device having a wireless transceiver function. The electronic device may be deployed on the land, including an indoor device, an outdoor device, a handheld device, wearable device, or a vehicle-mounted device. The electronic device may be a mobile phone, a tablet computer (Pad), a computer having a wireless transceiver function, a virtual reality (VR) electronic device, an augmented reality (AR) electronic device, a wireless terminal in industrial control, a vehicle-mounted electronic device, a wireless terminal in self driving, a wireless electronic device in remote medical, a wireless electronic device in a smart grid, a wireless electronic device in transportation safety, a wireless electronic device in a smart city, a wireless electronic device in a smart home, a wearable electronic device, etc. The electronic device in the embodiments of the present disclosure may also be referred to as a terminal, user equipment (UE), an access electronic device, a vehicle-mounted terminal, an industrial control terminal, a UE unit, a UE station, a mobile station, a mobile console, a remote station, a remote electronic device, a mobile device, a UE electronic device, a wireless communication device, a UE agent, a UE apparatus, etc. The electronic device may be stationary or mobile.

In the related art, a live photo is a dynamic image in which a segment of video captured before the image was taken and a segment of video captured after the image was taken can be stored. When a user long-presses the image, the user can browse the above-mentioned video. Currently, after a user opens a shooting interface of an electronic device, the electronic device may start recording a video and store the recorded video in a cache. When the user presses a shooting control, the electronic device may stop video recording after a duration, thereby obtaining a long video. The electronic device may extract a segment of video from the long video based on a moment at which the user pressed the shooting control, and combine it with the captured image to obtain a live photo. However, in the above-mentioned method, the long video cached in the electronic device occupies significant memory, which is prone to memory overflow when a duration of the user opening the shooting interface is long. Moreover, the majority of the recorded video is irrelevant to production of the live photo, leading to memory resource waste.

In order to solve the technical problems in the related art, the embodiments of the present disclosure provide a video processing method, including: recording a first video segment in response to a touch operation on a shooting control on a shooting interface, and determining a third video segment from a plurality of video segments in a preset storage space, where prior to the touch operation, the preset storage space is used to store one or more latest recorded video segments, and the third video segment is the last video segment recorded prior to the touch operation. An electronic device may obtain the duration of the third video segment, and obtain at least one second video segment from the preset storage space based on the duration of the third video segment. The electronic device may generate a video based on the first video segment and the at least one second video segment. As such, because the electronic device uses a segmented video recording approach, and prior to the touch operation, the preset storage space may store only the latest recorded video segment while deleting earlier recorded video segments, memory overflow caused by a long duration of opening the shooting interface can be avoided, thereby conserving memory resources of the electronic device.

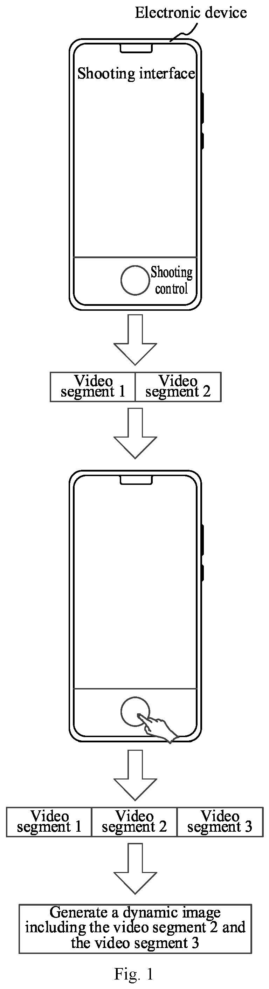

An application scenario of the embodiments of the present disclosure is described below with reference to Fig. 1.

Fig. 1 is a schematic diagram of an application scenario according to the embodiments of the present disclosure. Referring to Fig. 1, an electronic device is included. A display interface of the electronic device is a shooting interface, and the shooting interface may include a shooting control. When the electronic device displays the shooting interface, the electronic device may start recording a plurality of video segments. After the electronic device records a video segment 1 and a video segment 2, a user clicks the shooting control on the shooting interface, and then the electronic device may continue recording a video segment 3. The electronic device may generate a dynamic image including the video segment 2 and the video segment 3. In the above-mentioned method, if the user of the electronic device does not click the shooting control, the video segment 1 may be deleted after the electronic device records the video segment 3, so that memory resources can be effectively conserved, and memory overflow can be avoided. In addition, segmented video recording is used, so that flexibility of generating the dynamic image can be improved.

The technical solutions of the present disclosure and how the technical solutions of the present disclosure solve the above-mentioned technical problems are described below in detail with specific embodiments. The following several specific embodiments may be combined with each other, and details about same or similar concepts or processes may not be described in some embodiments again. The embodiments of the present disclosure are described below with reference to the drawings.

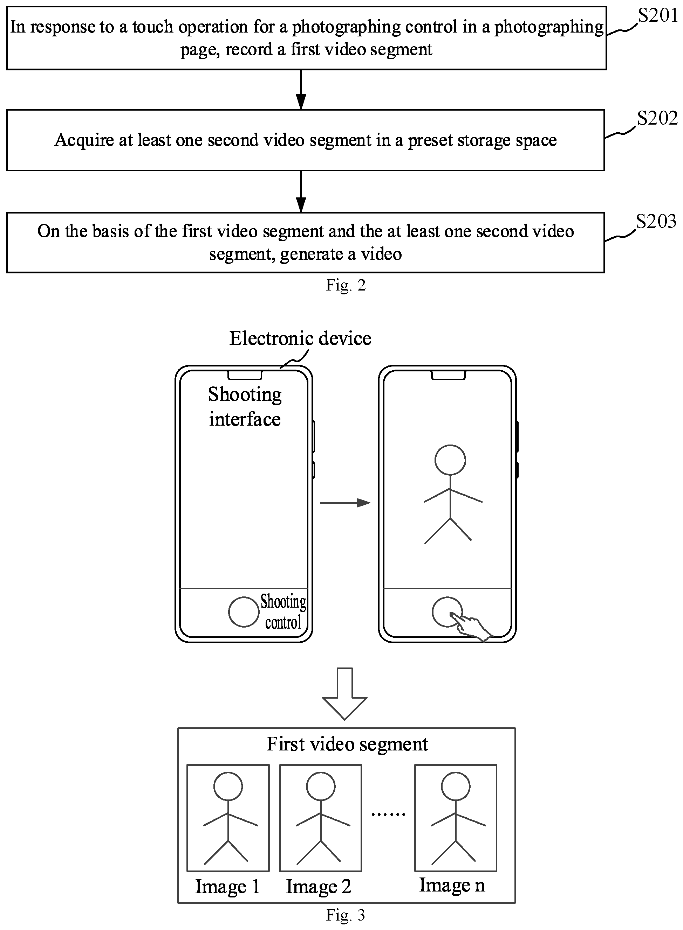

Fig. 2 is a schematic flowchart of a video processing method according to the embodiments of the present disclosure. Referring to Fig. 2, the method may include the following steps.

S201: recording a first video segment in response to a touch operation on a shooting control on a shooting interface.

An execution entity of this embodiment of the present disclosure may be an electronic device, or may be a video processing apparatus provided in the electronic device. The video processing apparatus may be implemented based on software, or the video processing apparatus may be implemented based on a combination of software and hardware. This is not limited in the embodiments of the present disclosure.

The electronic device may include a shooting application. When a user clicks the shooting application, the electronic device may display the shooting interface. The shooting interface may include a shooting control for shooting. The electronic device may capture an image in response to a touch operation (or a voice control operation, etc., which is not limited in the embodiments of the present disclosure) of the user on the shooting control.

The first video segment may be a video segment recorded by the electronic device after the user clicks the shooting control. For example, when the electronic device displays the shooting interface, the electronic device may store a video captured by a camera in a cache. The first video segment may be a video segment captured by the camera after the user clicks the shooting control. For example, if the user clicks the shooting control at a moment A, the first video segment may be a video segment captured by the camera of the electronic device after the moment A; or if the user clicks the shooting control at a moment B, the first video segment may be a video segment captured by the camera of the electronic device after the moment B.

Optionally, the duration of the first video segment may be a first duration. For example, if the first duration is 1 second and the user clicks the shooting control at the moment A, the electronic device may store a 1-second video captured by the camera after the moment A, to obtain the first video segment; or if the first duration is 2 seconds and the user clicks the shooting control at the moment B, the electronic device may store a 2-second video captured by the camera after the moment B, to obtain the first video segment.

A process of obtaining the first video segment is described below with reference to Fig. 3.

Fig. 3 is a schematic diagram of a process of obtaining a first video segment according to the embodiments of the present disclosure. Referring to Fig. 3, the electronic device is included. The display interface of the electronic device is the shooting interface, and the shooting interface may include the shooting control. When the electronic device displays the shooting interface, the shooting interface does not include a shooting object. When a user clicks the shooting control, the shooting interface includes a still shooting object, and the electronic device may continue capturing n images to obtain the first video segment. The first video segment includes an image 1, an image 2, ..., and an image n, where each image includes the still shooting object. That is, the first video segment may be the video segment captured by the camera of the electronic device after the user clicks the shooting control.

S202: obtaining at least one second video segment from a preset storage space.

The second video segment is a video segment recorded prior to the touch operation. For example, when the electronic device displays the shooting interface, the electronic device may store the video captured by the camera in the cache. The second video segment may be a video segment captured by the camera before the user clicks the shooting control. For example, if the user clicks the shooting control at the moment A, the second video segment may be a video segment captured by the camera of the electronic device before the moment A; or if the user clicks the shooting control at the moment B, the second video segment may be a video segment captured by the camera of the electronic device before the moment B.

Prior to the touch operation, the preset storage space is used to store one or more latest recorded video segments. For example, the preset storage space may include two latest recorded video segments recorded by the terminal device prior to the touch operation. For example, prior to the touch operation, the terminal device records a video segment 1, a video segment 2, and a video segment 3 in chronological order. If the preset storage space is used to store two latest recorded video segments, before the terminal device records the video segment 3, the preset storage space may include the video segment 1 and the video segment 2. When the terminal device starts recording the video segment 3, the terminal device may delete the video segment 1 (the earliest recorded video segment) from the preset storage space. At the end of recording of the video segment 3, the preset storage space may include the video segment 2 and the video segment 3.

Optionally, the duration of each of a plurality of video segments stored in the preset storage space may be any duration. This is not limited in the embodiments of the present disclosure.

The electronic device may obtain the at least one second video segment from the preset storage space based on a feasible implementation as follows: determining a third video segment from a plurality of video segments in the preset storage space, obtaining the duration of the third video segment, and obtaining the at least one second video segment from the preset storage space based on the duration of the third video segment.

The third video segment may be the last video segment recorded prior to the touch operation. For example, the electronic device records the video segment 1, the video segment 2, and the video segment 3 prior to the touch operation. When the electronic device completes recording of the video segment 3, if the user touches the shooting control, the electronic device may determine that the third video segment is the video segment 3.

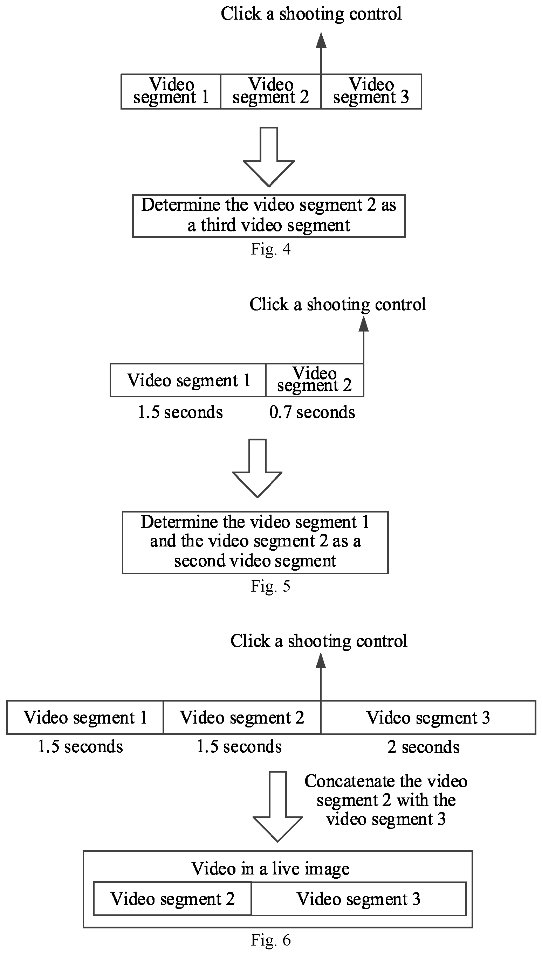

A process of obtaining the third video segment is described below with reference to Fig. 4.

Fig. 4 is a schematic diagram of obtaining a third video segment according to the embodiments of the present disclosure. Referring to Fig. 4, the video segment 1, the video segment 2, and the video segment 3 recorded by the electronic device (not shown in Fig. 4) are included. If the user clicks the shooting control after recording of the video segment 2 is completed, the electronic device may determine the video segment 2 as the third video segment, and the electronic device may determine the video segment 3 as the first video segment.

Optionally, the duration of each of the plurality of video segments in the preset storage space other than the third video segment may be a second duration, and the duration of the third video segment may be less than or equal to the second duration. For example, the electronic device may store the video segment 1 and the video segment 2 in the preset storage space. Therefore, both the duration of the video segment 1 and the duration of the video segment 2 may be the second duration. For example, in the embodiment shown in Fig. 4, the video segment 2 is the third video segment, the duration of the video segment 1 may be the second duration, the duration of the video segment 3 (the first video segment) may be the first duration, and the duration of the video segment 2 may be the second duration or less than the second duration. For example, in the embodiment shown in Fig. 4, the second duration of the video segment recorded by the electronic device is 1.5 seconds. After the electronic device completes recording of the video segment 1, if the electronic device continues recording for 0.5 seconds before the user clicks the shooting control, the electronic device may determine that the duration of the video segment 2 is 0.5 seconds.

It should be noted that in the embodiments of the present disclosure, both the first duration and the second duration may be any duration. This is not limited in the embodiments of the present disclosure. Further, the first duration may be equal to the second duration, or the first duration may not be equal to the second duration. This is not limited in the embodiments of the present disclosure.

Optionally, the electronic device may determine the duration of the third video segment based on any feasible implementation. This is not limited in the embodiments of the present disclosure.

There are two cases for the electronic device obtaining the at least one second video segment from the preset storage space based on the duration of the third video segment.

Case 1: the duration of the third video segment is equal to a first threshold.

If the duration of the third video segment is equal to the first threshold, the electronic device may determine the third video segment as the second video segment. The first threshold may be the duration of a recorded video segment in the preset storage space. For example, the first threshold may be the second duration in the embodiments of the present disclosure. If the electronic device determines that the duration of each video segment in the preset storage space is 1.5 seconds, the first threshold may be 1.5 seconds. In the case that the duration of the third video segment is equal to 1.5 seconds, it indicates that a preceding video segment has been recorded for 1.5 seconds before the user clicks the shooting control. Therefore, the electronic device may determine the video segment as the second video segment.

For example, in the embodiment shown in Fig. 4, the second duration may be 1.5 seconds. When the user clicks the shooting control, the electronic device may determine that the third video segment is the video segment 2. If the video segment 2 has been recorded for 1.5 seconds, the electronic device may determine the video segment 2 as the second video segment.

As such, the electronic device can accurately and quickly determine the second video segment based on the duration of the third video segment, without a need for trimming and concatenating the plurality of video segments in the preset storage space. Therefore, the efficiency of determining the second video segment is improved.

Case 2: the duration of the third video segment is less than the first threshold.

If the duration of the third video segment is less than the first threshold, the third video segment and a video segment recorded before the third video segment are determined as the second video segment. For example, the first threshold may be the second duration in the embodiments of the present disclosure. The first threshold may be 1.5 seconds. If the duration of the third video segment is less than 1.5 seconds, it indicates that a preceding video segment has not yet been recorded for 1.5 seconds before the user clicks the shooting control. Therefore, the duration of the third video segment is inadequate, and the electronic device may determine the third video segment and the video segment preceding the third video segment as the second video segment.

A process of determining the second video segment in this case is described below with reference to Fig. 5.

Fig. 5 is a schematic diagram of a process of determining a second video segment according to the embodiments of the present disclosure. Referring to Fig. 5, the video segment 1 and the video segment 2 stored by the electronic device (not shown in Fig. 5) in the preset storage space are included. The duration of the video segment 1 is 1.5 seconds, and the duration of the video segment 2 is 0.7 seconds. When the video segment 2 has been recorded for 0.7 seconds, the user clicks the shooting control, and the electronic device may determine the video segment 2 as the third video segment. Because the duration of the video segment 2 is less than 1.5 seconds, the electronic device may determine the video segment 1 and the video segment 2 as the second video segment. As such, in the case that the duration of the video segment 2 is inadequate, the electronic device may trim and concatenate the video segment 1 and the video segment 2 to obtain a video segment in a live photo that is captured before the live photo is taken. Therefore, the accuracy and flexibility of obtaining the live photo are improved, and system memory utilization can be optimized.

S203: generating a video based on the first video segment and the at least one second video segment.

The video may be a video in a live image. For example, the video may include a video segment captured before the user clicks the shooting control and a video segment captured after the user clicks the shooting control.

There are two cases for the electronic device generating the video based on the first video segment and the at least one second video segment.

Case 1: the number of second video segments is 1.

In response to the number of second video segments being 1, the first video segment is concatenated with the second video segment to obtain the video. For example, in response to the number of second video segments being 1, it indicates that recording of a video segment prior to the touch operation has been completed (i.e., a recording duration reaches the second duration). Therefore, the electronic device may concatenate the first video segment with the second video segment to obtain the video in the live image.

A process of generating the video in this case is described below with reference to Fig. 6.

Fig. 6 is a schematic diagram of generating a video according to the embodiments of the present disclosure. Referring to Fig. 6, the video segment 1, the video segment 2, and the video segment 3 stored by the electronic device (not shown in Fig. 6) in the preset storage space are included. The duration of the video segment 1 is 1.5 seconds, the duration of the video segment 2 is 1.5 seconds, and the duration of the video segment 3 is 2 seconds.

Referring to Fig. 6, the user clicks the shooting control at the end of recording of the video segment 2, and the electronic device may continue recording the 2-second video segment 3. Because the duration of the video segment 2 is the same as the duration of the video segment 1, the electronic device may determine the video segment 2 as the second video segment, and the electronic device may determine the video segment 3 as the first video segment.

Referring to Fig. 6, because the number of second video segments is 1, the electronic device may concatenate the video segment 2 with the video segment 3 in chronological recording order, so as to obtain the video in the live image. The video in the live image may include the video segment 2 and the video segment 3, and the duration of the video in the live image is 3.5 seconds. In this case, the electronic device can quickly obtain the video in the live image, so that the efficiency of generating the live image is improved.

Case 2: the number of second video segments is greater than 1.

In response to the number of second video segments being greater than 1, a fourth video segment is extracted from a plurality of second video segments, and the fourth video segment is concatenated with the first video segment to obtain the video. The duration of the fourth video segment may be the second duration, or the duration of the fourth video segment may be any duration. This is not limited in the embodiments of the present disclosure.

For example, in response to the number of second video segments being greater than 1, it indicates that the duration of the video segment recorded by the electronic device prior to the touch operation is inadequate. Therefore, the electronic device may extract the fourth video segment of the second duration from the plurality of second video segments, and concatenate the fourth video segment with the first video segment to obtain the video in the live image.

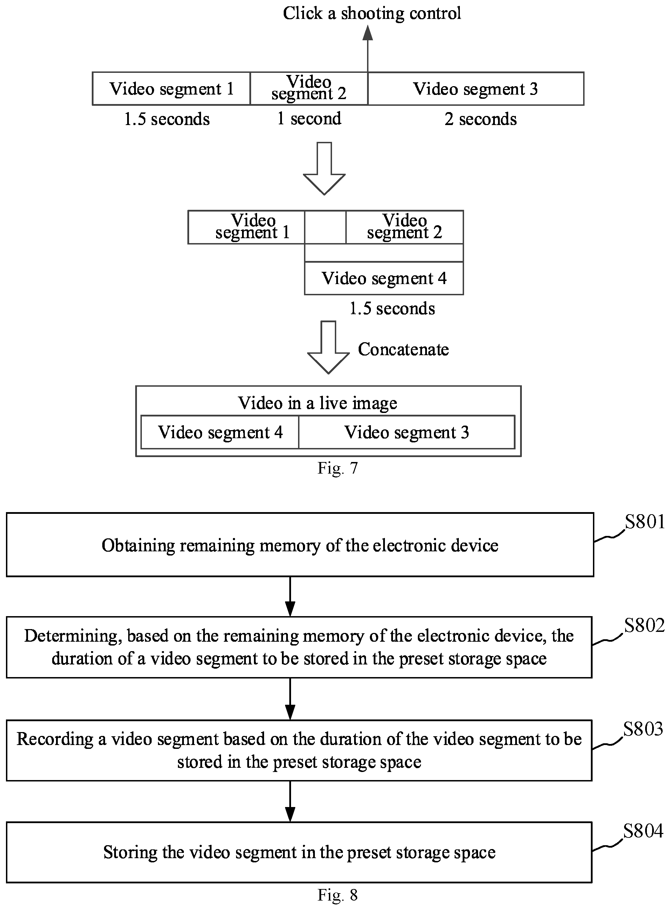

A process of generating the video in this case is described below with reference to Fig. 7.

Fig. 7 is another schematic diagram of generating a video according to the embodiments of the present disclosure. Referring to Fig. 7, the video segment 1, the video segment 2, and the video segment 3 stored by the electronic device (not shown in Fig. 7) in the preset storage space are included. The duration of the video segment 1 is 1.5 seconds, the duration of the video segment 2 is 1 second, and the duration of the video segment 3 is 2 seconds.

Referring to Fig. 7, when the video segment 2 has been recorded for 1 second, the user clicks the shooting control, and the electronic device stops recording the video segment 2 and records the 2-second video segment 3. Because the duration of the video segment 2 is less than the duration of the video segment 1, the electronic device may determine the video segment 1 and the video segment 2 as the second video segment. The electronic device may determine the video segment 3 as the first video segment.

Referring to Fig. 7, because the number of second video segments is 2, the electronic device may extract the 1.5-second video segment 4 from the video segment 1 and the video segment 2. The electronic device may concatenate the last 0.5-second video segment of the video segment 1 with the video segment 2 to obtain the video segment 4.

Referring to Fig. 7, the electronic device may concatenate the video segment 4 with the video segment 3 in chronological order, so as to obtain the video in the live image. The video in the live image may include the video segment 4 and the video segment 3, and the duration of the video in the live image may be 3.5 seconds. In this case, the electronic device can accurately extract a video segment of an adequate duration from a plurality of second video segments, thereby accurately determining the video in the live image, and improving the accuracy of the video.

It should be noted that in the embodiments of the present disclosure, the duration of the generated video may be any duration. This is not limited in the embodiments of the present disclosure. The duration of the video may determine the duration of the first video segment and the duration of the fourth video segment. For example, in the case that each video segment in the preset storage space is of 0.5 seconds, if a 2-second video is required before the user presses the shooting control, the electronic device may obtain at least four video segments before the shooting control is clicked. If a 4-second video is required after the user presses the shooting control, the electronic device may continue recording the 4-second video after the user presses the shooting control.

Optionally, after the electronic device generates the video based on the first video segment and the at least one second video segment, the video processing method mentioned above further includes: obtaining a captured image associated with the touch operation, and determining a live image based on the captured image and the video. For example, after the electronic device obtains the video, the electronic device may use the captured image as a cover of the video, so as to obtain the live image.

It should be noted that the electronic device may alternatively use any image in the video as the cover of the live image. This is not limited in the embodiments of the present disclosure.

The embodiments of the present disclosure provide the video processing method. The first video segment is recorded in response to the touch operation on the shooting control on the shooting interface. The third video segment is determined from a plurality of video segments in the preset storage space. The electronic device may obtain the duration of the third video segment. If the duration of the third video segment is equal to the first threshold, the third video segment is determined as the second video segment; and if the duration of the third video segment is less than the first threshold, the third video segment and the video segment recorded before the third video segment are determined as the second video segment. The electronic device may generate the video based on the first video segment and the at least one second video segment. As such, the electronic device uses the segmented video recording approach, and prior to the touch operation, the preset storage space may store only the one or more latest recorded video segments. Therefore, memory overflow caused by the fact that the shooting interface opens for a long duration can be avoided. In addition, the electronic device may encode a video segment immediately after recording the video segment, without a need for storing original image data in the preset storage space, so that memory resources of the electronic device can be conserved.

On the basis of the embodiment shown in Fig. 2, before the electronic device obtains the at least one second video from the preset storage space, the video processing method mentioned above further includes a method for storing a plurality of video segments in the preset storage space. The method for storing a plurality of video segments in the preset storage space is described below with reference to Fig. 8.

Fig. 8 is a schematic diagram of a method for storing a plurality of video segments according to the embodiments of the present disclosure. Referring to Fig. 8, a process of the method includes the following steps.

S801: obtaining remaining memory of an electronic device.

It should be noted that the electronic device may obtain the remaining memory of the electronic device based on any feasible implementation (e.g., by obtaining storage information of the device, etc.). This is not limited in the embodiments of the present disclosure.

S802: determining, based on the remaining memory of the electronic device, the duration of a video segment to be stored in the preset storage space.

Optionally, the electronic device may determine, based on a preset correspondence, the duration of the video segment to be stored in the preset storage space. The preset correspondence may include at least one piece of memory and the duration corresponding to each piece of memory. For example, the preset correspondence may be shown in Table 1:

**Table 1**

| Memory | Duration |
|---|---|
| Memory 1 | Duration 1 |
| Memory 2 | Duration 2 |
| Memory 3 | Duration 3 |
| ... | ... |

It should be noted that Table 1 shows the preset correspondence by way of examples only, and does not limit the preset correspondence.

For example, if the remaining memory of the electronic device is the memory 1, the electronic device may determine that the duration of the video segment to be stored in the preset storage space is the duration 1; if the remaining memory of the electronic device is the memory 2, the electronic device may determine that the duration of the video segment to be stored in the preset storage space is the duration 2; and if the remaining memory of the electronic device is the memory 3, the electronic device may determine that the duration of the video segment to be stored in the preset storage space is the duration 3.

Optionally, the remaining memory of the electronic device is in direct proportion to the duration of the video segment to be stored in the preset storage space. For example, larger remaining memory of the electronic device indicates a longer duration of the video segment to be stored by the electronic device in the preset storage space. As such, the memory of the electronic device can be effectively utilized, which not only improves the flexibility of video segment storage, but also improves memory utilization.

S803: recording a video segment based on the duration of the video segment to be stored in the preset storage space.

For example, if the duration of the video segment to be stored in the preset storage space is 0.5 seconds, the electronic device may record a 0.5-second video segment; and if the duration of the video segment to be stored in the preset storage space is 1.5 seconds, the electronic device may record a 1.5-second video segment.

S804: storing the video segment in the preset storage space.

Optionally, the electronic device may store a plurality of video segments in the preset storage space based on a feasible implementation as follows: obtaining the number of stored video segments in the preset storage space, and deleting an earliest recorded video segment from the preset storage space in response to the number of the stored video segments being greater than or equal to a second threshold.

It should be noted that the second threshold may be the number of latest video segments stored in the preset storage space, or may be any set value. This is not limited in the embodiments of the present disclosure.

The electronic device may record and store a plurality of video segments before the user presses the shooting control. In response to the number of the stored video segments in the preset storage space being large, the electronic device may delete the earliest recorded video segment, thereby optimizing utilization of the preset storage space. For example, the electronic device has recorded two 1.5-second video segments before the user presses the shooting control, and when the electronic device starts recording a third video segment, the electronic device may delete the first 1.5-second video segment from the preset storage space, thereby optimizing memory space utilization.

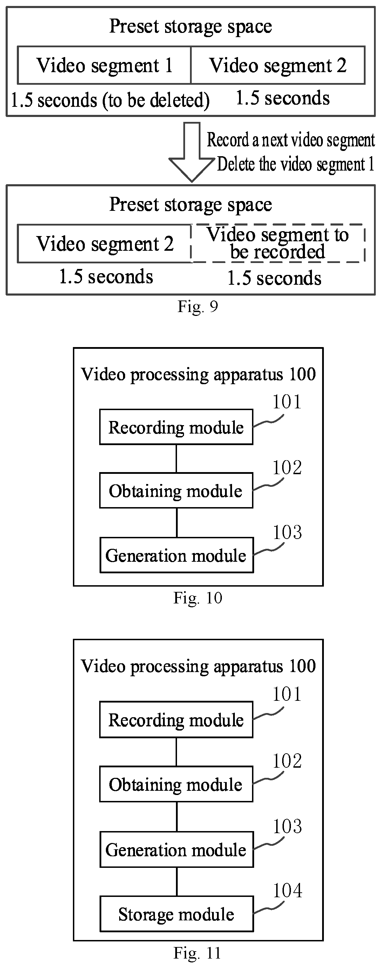

A process in which the electronic device stores a plurality of video segments is described below with reference to Fig. 9.

Fig. 9 is a schematic diagram in which an electronic device stores a plurality of video segments according to the embodiments of the present disclosure. Referring to Fig. 9, the preset storage space is included. The preset storage space may include the video segment 1 and the video segment 2. Both the video segment 1 and the video segment 2 are video segments recorded by the electronic device (not shown in Fig. 9) before the user presses the shooting control. The duration of the video segment 1 is 1.5 seconds, and the duration of the video segment 2 is 1.5 seconds. The video segment 1 is a video segment to be deleted.

Referring to Fig. 9, when the electronic device starts recording a next video segment following the video segment 2, the electronic device may delete the video segment 1, and the preset storage space may include the video segment 2. When the electronic device starts recording the video segment to be recorded, the electronic device may store the recorded content in the preset storage space. As such, by using a segmented pre-buffering mechanism, the electronic device allows up to two video segments to be stored in the preset storage space, so that memory utilization of the electronic device can be optimized.

The embodiments of the present disclosure provide the method for storing a plurality of video segments. The remaining memory of the electronic device is obtained. The duration of the video segment to be stored in the preset storage space is determined based on the remaining memory of the electronic device. The plurality of video segments are recorded based on the duration of the video segment to be stored in the preset storage space. The plurality of video segments are stored in the preset storage space. As such, in response to the number of the stored video segments in the preset storage space being greater than or equal to the second threshold, the electronic device may delete the earliest recorded video segment from the preset storage space. Therefore, memory utilization of the electronic device can be optimized, and memory overflow can be avoided.

Fig. 10 is a schematic structural diagram of a video processing apparatus according to the embodiments of the present disclosure. Referring to Fig. 10, the video processing apparatus 100 includes a recording module 101, an obtaining module 102, and a generation module 103.

The recording module 101 is configured to record a first video segment in response to a touch operation on a shooting control on a shooting interface.

The obtaining module 102 is configured to obtain at least one second video segment from a preset storage space, where the second video segment is a video segment recorded prior to the touch operation, and prior to the touch operation, the preset storage space is used to store one or more latest recorded video segments.

The generation module 103 is configured to generate a video based on the first video segment and the at least one second video segment.

According to one or more embodiments of the present disclosure, the obtaining module 102 is configured to:
determine a third video segment from a plurality of video segments in the preset storage space, where the third video segment is a last video segment recorded prior to the touch operation;
obtain a duration of the third video segment; and
obtain the at least one second video segment from the preset storage space based on the duration of the third video segment.

According to one or more embodiments of the present disclosure, the obtaining module 102 is configured to:
determine the third video segment as the second video segment in response to the duration of the third video segment being equal to a first threshold; and
determine the third video segment and a video segment recorded prior to the third video segment as the second video segment in response to the duration of the third video segment being less than the first threshold.

According to one or more embodiments of the present disclosure, the duration of the first video segment is a first duration, the duration of each of the plurality of video segments in the preset storage space other than the third video segment is a second duration, and the duration of the third video segment is less than or equal to the second duration.

According to one or more embodiments of the present disclosure, the generation module 103 is configured to:
in response to the number of second video segments being 1, concatenate the first video segment with the second video segment to obtain the video; and
in response to the number of second video segments being greater than 1, extract a fourth video segment from a plurality of second video segments, and concatenate the fourth video segment with the first video segment to obtain the video.

According to one or more embodiments of the present disclosure, the generation module 103 is further configured to:
obtain a captured image associated with the touch operation; and
determine a live image based on the captured image and the video.

The video processing apparatus provided in the embodiments of the present disclosure may be configured to perform the technical solution of the method embodiments described above. The implementation principles and technical effects thereof are similar, which are not repeated in the embodiments.

Fig. 11 is a schematic structural diagram of another video processing apparatus according to the embodiments of the present disclosure. On the basis of the embodiment shown in Fig. 10, referring to Fig. 11, the video processing apparatus 100 further includes a storage module 104. The storage module 104 is configured to:
obtain remaining memory of an electronic device;
determine, based on the remaining memory of the electronic device, the duration of a video segment to be stored in the preset storage space; and
record a video segment based on the duration of the video segment to be stored in the preset storage space, and store the video segment in the preset storage space.

According to one or more embodiments of the present disclosure, the storage module 104 is configured to:
obtain the number of stored video segments in the preset storage space; and
delete an earliest recorded video segment from the preset storage space in response to the number of the stored video segments being greater than or equal to a second threshold.

The video processing apparatus provided in the embodiments of the present disclosure may be configured to perform the technical solution of the method embodiments described above. The implementation principles and technical effects thereof are similar, which are not repeated in the embodiments.

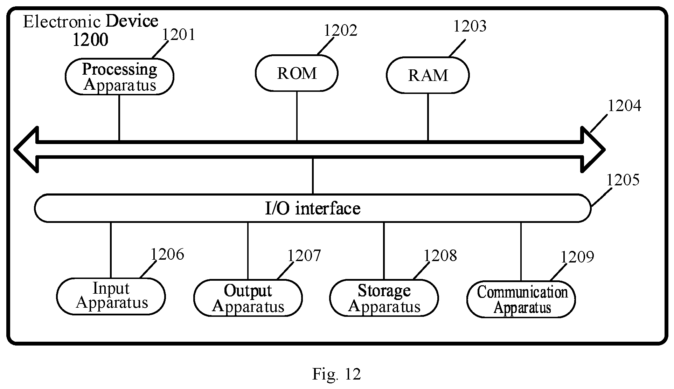

Fig. 12 is a schematic structural diagram of an electronic device according to the embodiments of the present disclosure. Reference is made to Fig. 12, which is a schematic structural diagram of an electronic device 1200 suitable for implementing an embodiment of the present disclosure. The electronic device may include, but is not limited to, a mobile terminal such as a mobile phone, a notebook computer, a digital broadcast receiver, a personal digital assistant (PDA), a portable android device (PAD), a portable media player (PMP), and a vehicle-mounted terminal (e.g., a vehicle navigation terminal), and a fixed terminal such as a digital TV and a desktop computer. The electronic device shown in Fig. 12 is merely an example, and shall not impose any limitation on the function and scope of use of the embodiments of the present disclosure.

As shown in Fig. 12, the electronic device 1200 may include a processing apparatus (for example, a central processing unit or a graphics processing unit) 1201 that may perform a variety of appropriate actions and processing based on a program stored in a read-only memory (ROM) 1202 or a program loaded from a storage apparatus 1208 into a random-access memory (RAM) 1203. The RAM 1203 further stores various programs and data required for the operation of the electronic device 1200. The processing apparatus 1201, the ROM 1202, and the RAM 1203 are connected to one another through a bus 1204. An input/output (I/O) interface 1205 is also connected to the bus 1204.

Generally, the following apparatuses may be connected to the I/O interface 1205: an input apparatus 1206 including, for example, a touchscreen, a touchpad, a keyboard, a mouse, a camera, a microphone, an accelerometer, and a gyroscope; an output apparatus 1207 including, for example, a liquid crystal display (LCD), a speaker, and a vibrator; the storage apparatus 1208 including, for example, a magnetic tape and a hard disk drive; and a communication apparatus 1209. The communication apparatus 1209 may allow the electronic device 1200 to perform wireless or wired communication with other devices to exchange data. Although Fig. 12 shows the electronic device 1200 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program includes program code for performing the method shown in the flowchart. In such an embodiment, the computer program may be downloaded and installed from a network through the communication apparatus 1209, installed from the storage apparatus 1208, or installed from the ROM 1202. When the computer program is executed by the processing apparatus 1201, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may alternatively be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiments.

The embodiments of the present disclosure further provide a computer-readable storage medium storing computer-executable instructions, when the computer-executable instructions are executed by a processor, the video processing method according to various possible designs of the above-mentioned embodiments is implemented.

The embodiments of the present disclosure further provide a computer program product including a computer program that, when executed by a processor, causes the video processing method according to various possible designs of the above-mentioned embodiments to be implemented.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases. For example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure. In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions. The data may include information, parameters, messages, etc., such as traffic split indication information.

According to a first aspect, one or more embodiments of the present disclosure provide a video processing method. The method includes:
recording a first video segment in response to a touch operation on a shooting control on a shooting interface;
obtaining at least one second video segment from a preset storage space, where the second video segment is a video segment recorded prior to the touch operation, and prior to the touch operation, the preset storage space is used to store one or more latest recorded video segments; and
generating a video based on the first video segment and the at least one second video segment.

According to one or more embodiments of the present disclosure, obtaining the at least one second video segment from the preset storage space includes:
determining a third video segment from a plurality of video segments in the preset storage space, where the third video segment is a last video segment recorded prior to the touch operation;
obtaining a duration of the third video segment; and
obtaining the at least one second video segment from the preset storage space based on the duration of the third video segment.

According to one or more embodiments of the present disclosure, obtaining the at least one second video segment from the preset storage space based on the duration of the third video segment includes:
determining the third video segment as the second video segment in response to the duration of the third video segment being equal to a first threshold; and
determining the third video segment and a video segment recorded prior to the third video segment as the second video segment in response to the duration of the third video segment being less than the first threshold.

According to one or more embodiments of the present disclosure, a duration of the first video segment is a first duration, a duration of each of the plurality of video segments in the preset storage space other than the third video segment is a second duration, and the duration of the third video segment is less than or equal to the second duration.

According to one or more embodiments of the present disclosure, generating the video based on the first video segment and the at least one second video segment includes:
in response to the number of second video segments being 1, concatenating the first video segment with the second video segment to obtain the video; and
in response to the number of second video segments being greater than 1, extracting a fourth video segment from a plurality of second video segments, and concatenating the fourth video segment with the first video segment to obtain the video.

According to one or more embodiments of the present disclosure, after generating the video based on the first video segment and the at least one second video segment, the method further includes:
obtaining a captured image associated with the touch operation; and
determining a live image based on the captured image and the video.

According to one or more embodiments of the present disclosure, before obtaining the at least one second video segment from the preset storage space, the method further includes:
obtaining remaining memory of an electronic device;
determining, based on the remaining memory of the electronic device, a duration of a video segment to be stored in the preset storage space; and
recording a video segment based on the duration of the video segment to be stored in the preset storage space, and storing the video segment in the preset storage space.

According to one or more embodiments of the present disclosure, storing the video segment in the preset storage space includes:
obtaining the number of stored video segments in the preset storage space; and
deleting an earliest recorded video segment from the preset storage space in response to the number of the stored video segments being greater than or equal to a second threshold.

According to a second aspect, one or more embodiments of the present disclosure provide a video processing apparatus. The video processing apparatus includes a recording module, an obtaining module, and a generation module.

The recording module is configured to record a first video segment in response to a touch operation on a shooting control on a shooting interface.

The obtaining module is configured to obtain at least one second video segment from a preset storage space, where the second video segment is a video segment recorded prior to the touch operation, and prior to the touch operation, the preset storage space is used to store one or more latest recorded video segments.

The generation module is configured to generate a video based on the first video segment and the at least one second video segment.

According to one or more embodiments of the present disclosure, the obtaining module is configured to:
determine a third video segment from a plurality of video segments in the preset storage space, where the third video segment is a last video segment recorded prior to the touch operation;
obtain a duration of the third video segment; and
obtain the at least one second video segment from the preset storage space based on the duration of the third video segment.

According to one or more embodiments of the present disclosure, the obtaining module is configured to:
determine the third video segment as the second video segment in response to the duration of the third video segment being equal to a first threshold; and
determine the third video segment and a video segment recorded prior to the third video segment as the second video segment in response to the duration of the third video segment being less than the first threshold.

According to one or more embodiments of the present disclosure, a duration of the first video segment is a first duration, a duration of each of the plurality of video segments in the preset storage space other than the third video segment is a second duration, and the duration of the third video segment is less than or equal to the second duration.

According to one or more embodiments of the present disclosure, the generation module is configured to:
in response to the number of second video segments being 1, concatenate the first video segment with the second video segment to obtain the video; and
in response to the number of second video segments being greater than 1, extract a fourth video segment from a plurality of second video segments, and concatenate the fourth video segment with the first video segment to obtain the video.

According to one or more embodiments of the present disclosure, the generation module is further configured to:
obtain a captured image associated with the touch operation; and
determine a live image based on the captured image and the video.

According to one or more embodiments of the present disclosure, the video processing apparatus further includes a storage module. The storage module is configured to:
obtain remaining memory of an electronic device;
determine, based on the remaining memory of the electronic device, a duration of a video segment to be stored in the preset storage space; and
record a video segment based on the duration of the video segment to be stored in the preset storage space, and store the video segment in the preset storage space.

According to one or more embodiments of the present disclosure, the storage module is configured to:
obtain the number of stored video segments in the preset storage space; and
delete an earliest recorded video segment from the preset storage space in response to the number of the stored video segments being greater than or equal to a second threshold.

The video processing apparatus provided in the embodiments of the present disclosure may be configured to perform the technical solution of the method embodiments described above. The implementation principles and technical effects thereof are similar, which are not repeated in the embodiments.

According to a third aspect, the embodiments of the present disclosure further provide an electronic device. The electronic device includes a processor and a memory.

The memory stores computer-executable instructions.

The computer-executable instructions stored in the memory, when executed by the processor, cause at least one processor to perform the video processing method according to the first aspect and various possible designs of the first aspect.

According to a fourth aspect, the embodiments of the present disclosure further provide a computer-readable storage medium storing computer-executable instructions, when the computer-executable instructions are executed by a processor, the video processing method according to the first aspect and various possible designs of the first aspect is implemented.

According to a fifth aspect, the embodiments of the present disclosure further provide a computer program product including a computer program that, when executed by a processor, causes the video processing method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A video processing method, comprising:
recording a first video segment in response to a touch operation on a shooting control on a shooting interface;
obtaining at least one second video segment from a preset storage space, wherein the second video segment is a video segment recorded prior to the touch operation, and prior to the touch operation, the preset storage space is used to store one or more latest recorded video segments; and
generating a video based on the first video segment and the at least one second video segment.

2. The method according to claim 1, wherein the obtaining the at least one second video segment from the preset storage space comprises:
determining a third video segment from a plurality of video segments in the preset storage space, wherein the third video segment is a last video segment recorded prior to the touch operation;
obtaining a duration of the third video segment; and
obtaining the at least one second video segment from the preset storage space based on the duration of the third video segment.

3. The method according to claim 2, wherein the obtaining the at least one second video segment from the preset storage space based on the duration of the third video segment comprises:
determining the third video segment as the second video segment in response to the duration of the third video segment being equal to a first threshold; and
determining the third video segment and a video segment recorded prior to the third video segment as the second video segment in response to the duration of the third video segment being less than the first threshold.

4. The method according to claim 3, wherein a duration of the first video segment is a first duration, a duration of each of the plurality of video segments in the preset storage space other than the third video segment is a second duration, and the duration of the third video segment is less than or equal to the second duration.

5. The method according to any one of claims 1 to 4, wherein the generating the video based on the first video segment and the at least one second video segment comprises:
in response to a total number of second video segments being 1, concatenating the first video segment with the second video segment to obtain the video; and
in response to the total number of second video segments being greater than 1, extracting a fourth video segment from a plurality of second video segments, and concatenating the fourth video segment with the first video segment to obtain the video.

6. The method according to any one of claims 1 to 5, wherein after the generating the video based on the first video segment and the at least one second video segment, the method further comprises:
obtaining a captured image associated with the touch operation; and
determining a live image based on the captured image and the video.

7. The method according to any one of claims 1 to 6, wherein before the obtaining the at least one second video segment from the preset storage space, the method further comprises:
obtaining remaining memory of an electronic device;
determining, based on the remaining memory of the electronic device, a duration of a video segment to be stored in the preset storage space; and
recording a video segment based on the duration of the video segment to be stored in the preset storage space, and storing the video segment in the preset storage space.

8. The method according to claim 7, wherein the storing the video segment in the preset storage space comprises:
obtaining a total number of stored video segments in the preset storage space; and
deleting an earliest recorded video segment from the preset storage space in response to the total number of the stored video segments being greater than or equal to a second threshold.

9. A video processing apparatus, comprising:
a recording module, configured to record a first video segment in response to a touch operation on a shooting control on a shooting interface;
an obtaining module, configured to obtain at least one second video segment from a preset storage space, wherein the second video segment is a video segment recorded prior to the touch operation, and prior to the touch operation, the preset storage space is used to store one or more latest recorded video segments; and
a generation module, configured to generate a video based on the first video segment and the at least one second video segment.

10. An electronic device, comprising a processor and a memory,
wherein the memory stores computer-executable instructions; and
the computer-executable instructions stored in the memory, when executed by the processor, cause the processor to perform the video processing method according to any one of claims 1 to 8.

11. A computer-readable storage medium storing computer-executable instructions, wherein when the computer-executable instructions are executed by a processor, the video processing method according to any one of claims 1 to 8 is implemented.
